(19) Europäisches Patentamt
European Patent Office
Office européen des brevets

(11) Numéro de publication: **0 260 203 B1**

(12) # FASCICULE DE BREVET EUROPEEN

(45) Date de publication de fascicule du brevet: **04.12.91**

(51) Int. Cl.$^5$: **C08J 7/04**, C08F 283/02, C09D 4/00, C09D 167/00

(21) Numéro de dépôt: **87420206.2**

(22) Date de dépôt: **28.07.87**

(54) **Procédé de revêtement de films en polyester et nouveaux films comportant un revêtement de surface.**

(30) Priorité: **12.08.86 FR 8611788**

(43) Date de publication de la demande: **16.03.88 Bulletin 88/11**

(45) Mention de la délivrance du brevet: **04.12.91 Bulletin 91/49**

(84) Etats contractants désignés: **AT BE CH DE ES FR GB IT LI LU NL SE**

(56) Documents cités:
**US-A- 4 476 189**

**CHEMICAL ABSTRACTS, vol. 99, no. 22, novembre 1983, page 41, résumé no. 176858u, Columbus, Ohio, US**

**CHEMICAL ABSTRACTS, vol. 101, no. 18, 29 octobre 1984, page 14, résumé no. 152545y, Columbus, Ohio, US**

**CHEMICAL ABSTRACTS, vol. 97, no. 6, 9 août 1982, page 77, résumé no. 40435e, Columbus, Ohio, US**

(73) Titulaire: **RHONE-POULENC FILMS
25, quai Paul Doumer
F-92408 Courbevoie(FR)**

(72) Inventeur: **Charmot, Dominique
18-20, rue Mathis
F-75019 Paris(FR)**
Inventeur: **Grosjean, Pierre
14, rue Alexandre Berthier
F-69110 Sainte-Foy-Les-Lyon(FR)**

(74) Mandataire: **Rioufrays, Roger et al
RHONE-POULENC INTERSERVICES Service Brevets Chimie Centre de Recherches des Carrières B.P. 62
F-69192 Saint-Fons Cédex(FR)**

**EP 0 260 203 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet un procédé d'obtention de films en polyester orientés comportant, sur au moins une de leurs faces, un revêtement destiné à améliorer la liaison entre les films utilisés comme supports d'une couche externe active et ladite couche et les films composites obtenus par ce procédé.

Leurs excellentes propriétés mécaniques et chimiques font des films en polyester linéaires dérivés d'acides aromatiques dicarboxyliques et de glycols, des supports particulièrement recherchés pour des revêtements filmogènes variés conduisant à des matériaux composites trouvant de nombreuses applications : emballage, pellicules photographiques, films ou feuilles pour l'art graphique (impression ou dessin), films métallisés, bandes d'enregistrement de sons ou d'images notamment. En dépit de leurs avantages, les films polyester ont toujours présenté un problème d'adhérence entre la base support et le revêtement final présentant les propriétés actives pour une application déterminée. Cette faible adhérence est généralement imputée à la structure de la surface des films et au caractère hydrophobe des polyesters notamment. On a proposé diverses méthodes pour tenter de résoudre ce problème ; ainsi on a décrit des traitements physiques (traitement à la flamme, décharges corona, traitement abrasif) ou chimiques (traitement par un acide) de la surface des films pour améliorer la liaison entre le support et son revêtement. Ces divers traitements n'étant pas exempts d'inconvénients, on a eu recours de préférence au dépôt, sur au moins une des faces du film, d'un revêtement intermédiaire présentant à la fois une bonne adhérence au film support et une bonne adhérence au revêtement définitif propre à chaque utilisation. De nombreux polymères ou copolymères ont été proposés pour la réalisation de ces revêtements intermédiaires que nous désignerons par la suite, pour raison de commodité, revêtement primaire d'adhérence ou couche d'ancrage. Les polymères qui conviennent le mieux à la solution du problème de l'adhérence des revêtements finals aux films polyester sont de nature acrylique (cf. par exemple brevet américain USP 2.794.742 ; USP 2.627.088 ; brevet français n° 1.428.831 ; brevet anglais n° 1.075.533). Ces polymères peuvent être thermoplastiques ou réticulables (cf. brevets français n° 1.428.831 et anglais n° 1.075.533). La mise en place du primaire d'adhérence est réalisée par enduction de solutions organiques ou, de préférence, d'émulsions aqueuses. L'enduction peut avoir lieu avant l'étirage du film support, le cas échéant entre deux étirages, voire même après le(ou les) étirages bien que l'enduction du revêtement primaire avant étirage ou entre deux étirages conduisant aux meilleurs résultats et en particulier à la meilleure liaison primaire/film support (cf. brevets américains précités).

Bien que l'emploi des polymères acryliques conduise à une augmentation substantielle de l'adhérence des revêtements finals aux films polyester support, on peut considérer le problème de cette adhérence comme résolu de façon satisfaisante. En effet, le revêtement acrylique doit être adapté à chaque type de revêtement final pour obtenir l'adhérence la plus élevée. Il en résulte, pour l'industriel, la nécessité de disposer de nombreuses variantes en fonction de la nature du revêtement final, de la nature du milieu du revêtement (influence de la polarité ou du caractère phydrphile ou organique de ce milieu).

On a encore proposé d'utiliser comme primaire d'adhérence, pour les films polyester, des solutions ou émulsions aqueuses de copolyesters solubles ou dispersables dans l'eau (cf. brevet américain n° 4.476.189 et brevet européen n° 78 559) obtenus par polycondensation de composés difonctionnels à groupes sulfonyloxy. Ces couches d'ancrage conviennent essentiellement à des revêtements hydrophiles.

Dans la demande de brevet japonais JP-A-8238803, on décrit des compositions photoréticulables constituées par une solution d'un copolyester saturé comportant des groupes sulfoniques, de poids moléculaire compris entre 1000 et 15000, dans au moins un monomère photoréticulable comportant deux ou plus de deux double-liaisons éthyléniques. De telles compositions qui de prêtent aisément à la dispersion de pigments, peuvent être utilisées dans la production de verres, de céramiques, de matières plastiques et de films et dans les encres, les peintures et les revêtements de céramiques, de métaux, de films tels que les films polyester auxquels elles adhèrent fortement. Le recours à de telles compositions implique la dissolution du copolyester dans le monomère polyéthylénique et donc l'utilisation de copolyesters de poids moléculaire déterminé. Par ailleurs, l'emploi de compositions photoréticulables pose le problème de leur conservation à l'abri de la lumière avant leur mise en oeuvre et complique le revêtement de films au stade industriel.

L'industrie est par conséquent à la recherche de primaire améliorant l'adhérence d'un nombre aussi élevé que possible de revêtements finals sans avoir à modifier profondément la composition du primaire en fonction de la nature du revêtment final. En d'autres termes, l'industrie est à la recherche de primaire ayant un caractère le plus universel possible.

La Demanderesse s'est précisément donnée pour but de contribuer à la solution de ce problème par l'utilisation d'un nouveau primaire d'ahdérence pour film polyester.

Un premier objet de la présente invention réside dans un procédé d'obtention de films en polyester

linéaire comportant, sur au moins une face, une couche d'un revêtement primaire nouveau améliorant l'adhérence du film support aux revêtements finals d'application qui lui sont destinés.

Un deuxième objet de la présente invention réside dans les films support destinés à recevoir des revêtements finals d'application et constitués par un film en polyester linéaire support comportant sur au moins une de ses faces un revêtement primaire nouveau améliorant l'adhérence du film support aux revêtements finals d'application qui lui sont destinés.

Un troisième objet de la présente invention réside dans l'utilisation des nouveaux films supports, selon l'invention, pour la préparation de films composites comportant un revêtement final d'application.

Un quatrième objet de la présente invention réside dans les films composites obtenus par dépôt d'un revêtement final d'application sur les films composites constituées par un film polyester linéaire support comportant, sur au moins une de ses faces, un revêtment primaire nouveau améliorant l'adhérence du film support aux revêtements finals d'application qui lui sont destinés.

Plus spécialement, un premier objet de la présente invention réside dans un procédé d'obtention d'un film orienté en polyester linéaire comportant, sur au moins une face, un revêtement primaire d'adhérence améliorant l'adhérence du film à un revêtement final d'application, caractérisé en ce que l'on dépose, sur au moins une des faces d'un film polyester support, une couche d'une composition aqueuse d'un polymère modifié obtenu par polymérisation radicalaire, en phase aqeuse, d'au moins un monomère de nature acrylique de formule générale :

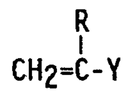 (II)

dans laquelle :

- R représente un atome d'hydogène ou un groupe alkyle comportant de 1 à 4 atomes de carbone, éventuellement substitué par un groupe hydroxyle ;
- Y représente un groupe fonctionnel hydroxycarbonyle ; alkoxycarbonyle de formule -COO$_1$ dans laquelle $R_1$ est un radical alkyle comportant de 1 à 20 atomes de carbone, linéaire ou ramifié (éventuellement substitué par un reste hydroxyle) ; nitrile ; amide de formule -CON($R_2$,$R_3$) dans laquelle $R_2$ et $R_3$, identiques ou différents représentent un atome d'hydrogène ou un reste alkyle linéaire ou ramifié, comportant de 1 à 20 atomes de carbone, l'un des radicaux $R_2$ et $R_3$ pouvant, en outre, représenter un radical hydroxyalkyle dans lequel le reste alkyle, linéaire ou ramifié, comporte de 1 à 20 atomes de carbone

en présence d'un polyester dissipable dans l'eau dérivé d'au moins un acide dicarboxylique aromatique, d'au moins un diol aliphatique et comportant une pluralité de groupes sulfonyloxy de formule générale :

$-SO_3M_n$ (I)

dans laquelle :
M représente :

- un atome d'hydrogène
- un métal alcalin ou alcalino-terreux
- un reste ammonium
- un reste ammonium quaternaire

n est égal à 1 ou, lorsque M est un métal alcalino-terreux, à 1/2, ledit polyester dissipable représentant 5 % à 60 % en poids du total polyester dissipable/(co) polymère acrylique.

Par "polyester dissipable dans l'eau" on désigne, aux fins de la présente demande, des polyesters solubles dans l'eau ou des polyesters formant avec l'eau des dispersions stables homogènes. Par "revêtement primaire d'adhérence" ou "primaire" on désignera ci-après le revêtement destiné à améliorer la cohésion entre le film polyester support et un "revêtement final d'application". Cette dernière expression désigne les revêtements finals qui confèrent aux films polyester leurs propriétés d'utilisation industrielles (films pour reproduction graphique, films photographiques, films magnétiques par exemple).

La demanderesse a constaté, de manière inattendue, que les polymères modifiés obtenus par polymérisation d'au moins un monomère de nature acrylique en présence d'un polyester sulfoné soluble ou dispersable dans l'eau améliore, de façon notable, l'adhérence de revêtements de nature variée, hydrophiles ou hydrophobes, aux films polyester supports. En particulier, il a été constaté que le polymère ainsi obtenu procure une telle amélioration de l'adhérence, aussi bien vis-à-vis des polymères acryliques utilisés

comme primaires et obtenus en l'absence de polyesters sulfonés, que vis-à-vis des mélanges, préparés extemporanément, de polymères acryliques et de polyesters sulfonés et que des polyesters sulfonés seuls.

Les polyesters à groupes sulfonyloxy solubles ou dispersables dans l'eau, utilisables pour préparer les primaires d'adhérence, selon l'invention, sont des produits connus, décrits notamment dans les brevets français n° 1.401.581 et n° 1.602.002 et la demande de brevet européen n° 0 129 674 ; aux fins de la présente invention on peut avoir recours aux polyesters à groupes sulfonyloxy décrits dans ces brevets. Plus spécifiquement, les polyesters solubles ou dispersables dans l'eau utilisés pour préparer les nouveaux primaires d'adhérence pour films polyester sont obtenus par polycondensation d'un ou plusieurs acides aromatiques dicarboxyliques avec au moins un ou plusieurs diols aliphatiques et au moins un composé difonctionnel comportant au moins un groupe sulfonyloxy ; par la suite, pour la commodité de l'exposé, l'expression "groupe sulfonyloxy" désignera aussi bien les groupes hydroxysulfonyles que les sels alcalins, alcalino-terreux ou d'ammonium qui en dérivent.

Parmi les acides aromatiques dicarboxyliques utilisables pour préparer les polyesters dissipables dans l'eau on peut citer, à titre d'exemples non limitatifs : les acides téréphtalique, isophtalique, phtalique, naphtalènedicarboxylique-1,4, oxydibenzoïque-4,4′, la bis(hydroxycarbonyl-4 phényl)sulfone, la di-hydroxycarbonyl-4,4′benzophénone. Ces acides peuvent être utilisés seuls ou en mélanges. Parmi les acides précités on fait appel, de préférence, aux acides téréphtalique et isophtalique seuls ou en combinaisons avec les autres acides cités. Les mélanges d'acide téréphtalique avec un ou plusieurs autres acides dicarboxyliques aromatiques et en particulier avec l'acide isophtalique conviennent tout particulièrement bien à l'obtention des polyesters sulfonés dissipables dans l'eau. Dans ce cas la quantité d'acide téréphtalique exprimée en moles peut varier entre 20 et 99 % du nombre total de moles de diacides non sulfonés et de préférence entre 30 et 95 %.

Pour la préparation des copolyesters dissipables des acides dicarboxyliques aliphatiques comportant de 3 à 15 atomes de carbone peuvent être associés aux diacides aromatiques. Plus particulièrement tout ou partie de l'acide aromatique utilisé conjointement à l'acide téréphtalique (par exemple l'acide isophtalique) peut être remplacé par des acides aliphatiques tels que les acides adipique, subérique, sébacique, succinique, dodécanedioïque.

Pour la préparation des polyesters sulfonés dissipables dans l'eau les acides dicarboxyliques peuvent être remplacés, lors de la polycondensation, par leurs dérivés utilisés habituellement dans ce type de réaction : anhydrides, esters ou chlorures d'acides. On fait appel de préférence aux esters et en particulier aux esters méthyliques.

Comme exemples de diols utilisables pour la préparation des polyesters sulfonés dissipables dans l'eau on peut citer l'éthylèneglycol ; le butanediol-1,4 ; le butanediol-1,3 ; le propanediol-1,3 ; le propanediol-1,2 ; le diméthyl-2,2 propanediol-1,3 ; le pentanediol-1,5 ; l'hexanediol-1,6 ; le diéthylèneglycol ; le triéthylèneglycol ; le néopentylglycol ; le cyclohexanediméthanol ; le tétraéthylèneglycol ; les penta-, hexa- ou décamétylèneglycol. L'éthylèneglycol et ses oligomères conviennent tout particulièrement bien à la préparation des polyesters sulfonés. On peut les utiliser seuls ou en mélange entre eux et/ou avec d'autres diols. Les mélanges d'éthylèneglycol et de ses oligomères de formule $HO-(CH_2-CH_2-O-)_mH$ dans laquelle m est un nombre entier compris entre 2 et 10 sont préférés.

Les groupes sulfonyloxy de formule $-SO_3M$ sont introduits dans le polyester par l'intermédiaire d'un composé difonctionnel, à groupe sulfonyloxy, susceptible de réagir avec les diacides et/ou les diols au cours de la polycondensation. Des exemples de tels monomères sont cités dans le brevet français n° 1.602.002. On fait appel, de préférence, aux sels de métaux alcalins d'acides aromatiques dicarboxyliques à groupes sulfonyloxy tels que ceux des acides sulfotéréphtaliques, sulfoisophtaliques, sulfophtaliques, hydroxysulfonyl-4 naphtalènedicarboxylique-2,7 ou à leurs dérivés et en particulier à leurs esters. La quantité de composé bifonctionnel à groupe sulfonyloxy présente dans le polyester sulfoné, exprimée en moles pour un total de 100 moles de composés difonctionnel de même nature est de préférence comprise entre 5 moles et 30 moles %. En général des quantités de composés difonctionnels sulfonées comprises entre 8 moles et 15 moles pour un total de 100 moles de composés difonctionnels de même nature conviennent bien. Ainsi, lorqu'on fait appel a un sel alcalin de l'acide hydroxysulfonyl-5 isophtalique, ce composé peut représenter de 5 moles à 30 moles pour un total de 100 moles de motifs acides dicarboxyliques présents dans le polyester.

Les polyesters dissipables dans l'eau décrits précédemment sont obtenus par les procédés usuels, par exemple par réaction du ou des diols avec un mélange des esters méthyliques des différents acides nécessaires, en présence des catalyseurs usuels de transestérification, puis polycondensation des esters de diols ainsi obtenus. Les quantités de chacun des réactifs sont calculées pour que le rapport du nombre total de groupes hydroxyles alcooliques au nombre total de groupes carboxyliques soit de préférence compris entre 2 et 2,5.

Les monomères acryliques auxquels on fait appel pour la préparation des primaires d'adhérence, selon la présente invention, peuvent être représentés par la formule générale :

$$CH_2=\overset{\displaystyle R}{\overset{|}{C}}-Y \qquad (II)$$

dans laquelle :

- R représente un atome d'hydrogène ou un groupe alkyle comportant de 1 à 4 atomes de carbone, éventuellement substitué par un groupe hydroxyle ;
- Y représente un groupe fonctionnel hydroxycarbonyle ; alkoxycarbonyle de formule $-COOR_1$ dans laquelle $R_1$ est un radical alkyle comportant de 1 à 20 atomes de carbone, linéaire ou ramifié (éventuellement substitué par un reste hydroxyle); nitrile ; amide de formule $-CON(R_2,R_3)$ dans laquelle $R_2$ et $R_3$, identiques ou différents représentent un atome d'hydrogène ou un reste alkyle linéaire ou ramifié, comportant de 1 à 20 atome de carbone, l'un des radicaux $R_2$ et $R_3$ pouvant, en outre, représenter un radical hydroxyalkyle dans lequel le reste alkyle, linéaire ou ramifié, comporte de 1 à 20 atomes de carbone.

  Comme exemples spécifiques de radicaux $R_1$, $R_2$ et $R_3$, on peut citer les radicaux méthyle, éthyle, n-propyle, isopropyle, n-butyle, isobutyle, tertiobutyle, n-pentyle, n-hexyle, éthyl-2 hexyle, décyles, dodécyles, octadécyles. Comme exemple de radicaux hydroxyalkyles $R_1$, $R_2$ ou $R_3$, on peut citer les radicaux hydroxyméthyle, hydroxy-2 éthyle, hydroxy-3 propyle, hydroxy-4 butyle.

  Dans la formule (II), R représente de préférence un atome d'hydrogène ou des radicaux méthyle ou hydroxyméthyle.

Parmi les dérivés acryliques de formule (I) auxquels on peut faire appel pour la préparation des primaires d'adhérence, selon l'invention, on peut citer à titre non limitatif : l'acide acrylique, l'acide méthacrylique, l'acrylonitrile, le méthacrylonitrile, l'acrylamide, la méthacrylamide, la N-méthylacrylamide, la N-méthylolméthacrylamide, la N-méthylolacrylamide, les acrylates et méthacrylates de méthyle, d'éthyle, de n-propyle, d'isopropyle, de n-butyle, d'isobutyle, d'éthyl-2 hexyle, de stéaryle. Ces monomères peuvent être utilisés seuls ou en mélanges de deux ou plus de deux dérivés acryliques, selon les propriétés désirées pour le produit final ou la nature du revêtement final. Ainsi, il est possible d'associer des monomères lipophiles (esters acryliques) et hydrophiles (acides acrylique ou méthacrylique, acrylamide) en quantités variables pour accentuer le caractère hydrophile ou lipophyle du produit final ou obtenir un compromis entre ces deux caractères. Lorsque le revêtement final est une couche métallique il est préférable qu'un acide acrylique ou méthacrylique figure parmi les comonomères. Comme exemple d'association de dérivés acryliques, on peut citer les mélanges : méthacrylate de méthyle/acide acrylique et/ou méthacrylique, méthacrylate de méthyle/acide acrylique ou méthacrylique/acrylate d'éthyle ; méthacrylate de méthyle/acrylate d'éthyle/acrylamide ou méthacrylamide ; acrylamide/méthacrylamide ; acrylate de butyle/acide acrylique ; méthacrylate de butyle/acrylate d'éthyle.

Les composés acryliques peuvent encore être associés à une quantité mineure d'un ou plusieurs monomères éthylèniques tels que l'acétate de vinyle, le chlorure de vinylidène, le styrène, l'$\alpha$-méthylstyrène, les acides crotonique, itaconique, fumarique ou maléïque. Ces derniers conviennent tout particulièrement bien. Dans ce cas la quantité de monomère éthylènique non acrylique est calculée de façon à ce que dans le copolymère obtenu le nombre de motifs récurrents de monomère non acrylique exprimé en moles pour 100 moles de monomère acrylique soit de préférence inférieur ou égal à 20 % et plus préférentiellement encore à 10 %. Des quantités de motifs éthylèniques représentant de 0,1 à 5% en moles conviennent bien. On pourrait, sans sortir du cadre de la présente invention, associer une quantité mineure d'un monomère polyéthylénique tel que le phtalate de diallyle, le divinylbenzène ou un diacrylate ou diméthacrylate d'un diol (diacrylate d'éthylèneglycol par exemple). La quantité d'un tel monomère exprimée comme précédemment, est de préférence inférieure à 5 moles, pour 100 moles de monomère acrylique monofonctionnel. En général, elle est comprise entre 0,1 mole et 3 moles %.

Pour la préparation des polymères modifiés destinés au revêtement des films polyester conformément à la présente invention, on opère selon les techniques habituelles de polymérisation radicalaire des monomères à non saturation éthylénique en phase aqueuse. En général, la polymérisation est réalisée par dispersion du ou des monomères acryliques dans un volume convenable d'eau dans lequel on introduit la quantité nécessaire d'un polyester sulfoné dissipable et le cas échéant, un ou plusieurs agents émulsifiants classiques. En effet, bien que le polyester sulfoné puisse jouer lui-même le rôle d'émulsifiant permettant la dispersion du ou des monomères dans l'eau, cela n'exclut pas le recours aux agents tensio-actifs usuels

tels que par exemple les sels alcalins de sulfates d'alcools à longue chaîne (laurylsulfate de sodium ; laurylsulfate d'éthanolamine) ; les sels alcalins d'acides sulfoniques à longues chaînes ; les émulsifiants non ioniques tels que les polyoxyéthylèneglycols et leurs dérivés. La polymérisation est initiée à l'aide des générateurs de radicaux libres habituels tels que les composés peroxydes : persulfates, eau oxygénée, peroxydes organiques (peroxydes de lauroyle, de benzoyle, hydroperoxyde de t-butyle) ; les composés azo (azodiisobutyronitrile) ; les systèmes redox associant un composé peroxydique, de préférence soluble dans l'eau, et un réducteur : sels ferreux (sulfate), sulfites ou bisulfites alcalins.

D'autres adjuvants usuels de polymérisation peuvent être présents dans le milieu réactionnel. Ainsi on peut opérer en présence d'un agent limiteur de chaîne usuel tel que les mercaptans (dodécylmercaptan, tétradécylmercaptan), de façon à régler le poids moléculaire du copolymère obtenu en fonction des propriétés désirées pour le revêtement final.

La température à laquelle est conduite la polymérisation peut varier dans de larges limites. En général, une température comprise entre 10 et 100 °C de préférence entre 20 et 80 °C convient bien.

L'étude du produit résultant de la polymérisation d'au moins un monomère acrylique tel que défini ci-avant, en présence d'un polyester dissipable, a permis de constater que le polyester est lié chimiquement au polymère acrylique. Sans que l'invention soit en quoi que ce soit limitée à un mécanisme réactionnel particulier, il semble que le polyester et le(s) monomère(s) acrylique(s) réagissent pendant la polymérisation avec formation d'un copolymère greffé.

La quantité minimale de polyester dissipable présente dans le produit résultant de la polymérisation dépend, dans une certaine mesure, de la nature du polyester dissipable et du/ou des monomères acryliques. Cette quantité minimale est celle qui provoque une amélioration significative de l'adhérence des revêtements finals par rapport aux polymères acryliques et/ou aux polyesters dissipables utilisés seuls ou en mélanges. La détermination de cette quantité minimale (ou quantité efficace) peut être aisément réalisée par l'homme de métier dans chaque cas particulier.

Pour mettre en oeuvre le procédé de revêtement de films polyester selon l'invention, il est préférable que dans le produit résultant de la polymérisation, le polyester dissipable représente au moins 5 % en poids et de préférence au moins 10 % en poids du total polyester dissipable/(co)polymère acrylique. La présence de polyester dissipable non lié chimiquement et/ou de (co)polymère acrylique libre n'est pas préjudiciable à la mise en oeuvre du procédé ; il n'est donc pas nécessaire de les éliminer de l'émulsion obtenue. La quantité de polyester dissipable peut varier jusqu'à 60 % en poids du total polymère dissipable/(co)polymère acrylique. Une quantité de polyester dissipable comprise entre 10 et 45 % en poids convient bien.

La concentration du polyester dissipable et du ou des monomère(s) polymérisable(s) dans la phase aqueuse de polymérisation n'est pas critique et peut varier dans de larges limites. Cette concentration est choisie en fonction du taux de matières solides désiré pour l'émulsion finale et du taux de polymérisation du ou des monomère(s) dans les conditions de polymérisation.

Le produit aqueux obtenu après polymérisation peut être utilisé directement pour la mise en oeuvre du procédé selon l'invention. Il peut également faire l'objet de traitements divers. Ainsi, on peut à la fin de la polymérisation procéder à l'élimination des monomères non transformés par les moyens usuels. Lorsque l'un ou plusieurs des composants de la réaction comporte des fonctions acides libres, ces dernières peuvent être neutralisées par addition d'une base minérale ou organique ; on fait appel de préférence à une base alcaline (soude, potasse), à un hydroxyde d'ammonium quaternaire ou à l'ammoniaque. Il peut s'agir des fonctions acides sulfonique du polyester dissipable et/ou des fonctions acide carboxylique du (co)-polymère acrylique. On peut encore ajouter à l'émulsion obtenue les adjuvants utilisés habituellement dans les composition pour primaire d'adhérence (charges, stabilisants, lubrifiants, agents antiblocage, antistatique). Selon une variante, on peut encore introduire dans l'émulsion obtenue des agents de réticulation connus des (co)polymères acryliques.

La nature des agents réticulants dépend de la nature du ou des monomères acryliques. Parmi les agents réticulants préférés, on peut citer la mélamine, les résines formophénoliques, les résines amines-formol telles que les produits de condensation mélamine/formol, urée/formol, triazine/formol. La quantité de réticulant est alors en général comprise entre 0,1 et 15 % en poids, et de préférence entre 0,5 et 12 % en poids par rapport au poids total du polyester dissipable et du (co)polymère acrylique présent dans l'émulsion.

Le produit résultant de la polymérisation présente diverses formes, selon la proportion et la nature des réactifs mis en jeu et/ou les conditions de la polymérisation, et/ou le traitement final appliqué au produit obtenu. Ainsi, les produits résultant de la polymérisation d'un monomère acrylique non acide avec une quantité notable d'un acide polymérisable [acides (meth) acryliques, acide crotonique], par exemple au moins 5 % en moles du total des monomères polymérisables peut se présenter sous forme d'une émulsion

vraie lorsque les groupes acides carboxyliques sont libres ou sous forme de solutions aqueuses plus ou moins visqueuses lorsque les groupes carboxyliques sont neutralisés au moyen d'une des bases citées auparavant et en particulier au moyen d'une base alcaline. La viscosité de ces solutions n'est pas critique et peut être réglée à volonté en fonction des besoins par utilisation lors de la polymérisation d'un agent limiteur de chaîne.

Les polyesters linéaires constituant les films utilisables comme support dans le procédé, selon l'invention, sont des produits de polycondensation d'un ou plusieurs acides dicarboxyliques aromatiques (acide téréphtalique, acide isophtalique par exemple), ou de leurs dérivés (halogénures, esters) avec au moins un alcoylèneglycol (éthylèneglycol ; propanediol-1,3 ; butanediol-1,4 par exemple). De préférence, il s'agit de polyesters dérivés de l'acide téréphtalique ou d'un mélange d'acide téréphtalique et d'un autre acide aromatique dicarboxylique (acide isophtalique par exemple), la teneur du mélange en acide téréphtalique étant suffisante pour que le polymère soit essentiellement cristallin après étirage. De préférence, la teneur en acide téréphtalique, exprimée en moles pour cent mole d'acide est d'au moins 80.

Le polyester préféré, aux fins de la présente invention, est le polytéréphtalate d'éthylèneglycol.

Les films polyester linéaires mis en oeuvre à l'enduction peuvent être ou non orientés. Dans le premier cas ils peuvent avoir subi un étirage dans une ou deux directions perpendiculaires, puis une thermofixation de façon connue en soi. On fait appel, de préférence, à des films non orientés ou orientés dans une seule direction. L'épaisseur des films après étirage peut varier dans de larges limites ; en général le procédé selon l'invention s'applique à des films qui ont ou qui auront, après étirage et thermofixation, des épaisseurs comprises entre 5 et 300 micromètres et plus spécialement entre 8 et 250 micromètres.

Le dépôt du primaire d'adhérence sur le film polyester peut être réalisé par les différentes techniques connues de l'homme de l'art. Ainsi, l'émulsion ou la solution aqueuse de polymère peut être déposée par gravité à partir d'une couleuse à fente, ou par passage du film dans l'émulsion ou la solution ou encore au moyen de rouleaux de transfert. L'épaisseur de la couche est contrôlée par tout moyen approprié. Le dépôt du revêtement peut avoir lieu soit avant tout étirage du film (enduction en ligne), soit après étirage avant ou après thermofixation (enduction en reprise). On préfère toutefois procéder à l'enduction du film polyester avant l'étirage ou entre deux étirages.

Préalablement à l'enduction par le primaire d'adhérence le film polyester peut être soumis à un traitement de surface choisi parmi ceux habituellement utilisés, et plus particulièrement parmi les traitements physiques. Ainsi la surface destinée à recevoir le primaire d'adhérence peut être soumise à des décharges électriques (traitement corona) ou à des radiations ionisantes. Cependant de tels traitements ne sont pas indispensables.

La quantité de composition aqueuse d'enduction déposée sur le film dépend d'une part de sa teneur en extrait sec et d'autre part de l'épaisseur désirée pour le revêtement du film fini, c'est-à-dire après étirage et thermofixation lorsque l'enduction a lieu en ligne. Cette quantité dépend également du moment de l'enduction ; on doit évidemment tenir compte de la variation d'épaisseur du revêtement avant et après étirage, lorsque l'enduction est réalisée avant étirage. L'épaisseur du revêtement fini peut varier dans de larges limites. En général, la quantité de composition aqueuse d'enduction est calculée pour que la quantité de produit sec déposé sur le film fini soit comprise entre 0,01 et 0,5 g/m$^2$ et de préférence entre 0,05 et 0,3 g/m$^2$.

Après enduction, le film polyester est traité à chaud pour éliminer l'eau contenue dans le revêtement et, le cas échéant, pour provoquer la réticulation du polymère. Dans le cas de l'enduction en ligne, il n'est en général pas nécessaire de procéder à un traitement thermique ; le séchage et éventuellement la réticulation sont réalisés au cours de l'étirage et de la thermofixation. On ne sortirait cependant pas du cadre de la présente invention en procédant dans ce cas, préalablement à l'étirage et à la thermofixation, à un traitement thermique suffisant pour provoquer la coolescence du latex et le séchage.

Un deuxième objet de la présente invention réside dans les films polyester linéaires orientés comportant un primaire d'adhérence, obtenus suivant le procédé de l'invention.

Plus spécifiquement, un deuxième objet de l'invention réside dans de nouveaux films polyester linéaires orientés comportant, sur au moins une face, un revêtement primaire de nature acrylique réticulé ou non, caractérisé en ce que ledit revêtement primaire est constitué par un polymère modifié obtenu par polymérisation radicalaire en phase aqueuse d'au moins un monomère acrylique de formule générale :

$$CH_2=\overset{\overset{R}{|}}{C}-Y \qquad (II)$$

dans laquelle :

- R représente un atome d'hydrogène ou un groupe alkyle inférieur, éventuellement substitué par un groupe hydroxyle ;
- Y représente un groupe fonctionnel hydroxycarbonyle ; alkoxycarbonyle de formule $-COOR_1$ dans laquelle $R_1$ est un radical alkyle comportant de 1 à 20 atomes de carbone, linéaire ou ramifié (éventuellement substitué par un reste hydroxyle) ; nitrile ; amide de formule $-CON(R_2,R_3)$ dans laquelle $R_2$ et $R_3$, identiques ou différents représentent un atome d'hydrogène ou un reste alkyle linéaire ou ramifié, comportant de 1 à 20 atomes de carbone, l'un des radicaux $R_2$ et $R_3$ pouvant, en outre, représenter un radical hydroxyalkyle dans lequel le reste alkyle, linéaire ou ramifié, comporte de 1 à 20 atomes de carbone

en présence d'un polyester dissipable dans l'eau dérivé d'au moins un acide dicarboxylique aromatique, d'au moins un diol aliphatique et comportant une pluralité de groupes sulfonyloxy de formule générale :

$-SO_3M_n$ (I)

dans laquelle M et n ont la signification donnée précédemment, ledit polyester représentant 5 % à 60 % en poids du total polyester dissipable/(co)polymère acrylique.

Les films polyester à revêtement primaire, dénommés ci-après films supports composites, peuvent trouver de nombreuses applications après dépôt d'un revêtement final approprié à chaque type d'application. Ainsi, ils peuvent être utilisés comme support d'émulsions photographiques, comme supports de revêtements permettant l'impression ou le dessin (films pour art graphique), comme support de revêtements imprimables et/ou complexable pour l'emballage, comme support magnétique.

Plus spécialement les films supports composites suivant l'invention présentent une excellente adhérence aux encres d'impression, et notamment à celles qui ont généralement une faible adhérence aux films polyester telles que les encres nitrocellulosiques, aux revêtements métalliques tels que ceux obtenus par métallisation sous vide (par exemple revêtement d'aluminium), aux revêtements polymériques déposés par les techniques usuelles d'enduction, de coextrusion, de laminage, d'extrusion-couchage. Les films polyester composites selon l'invention présentent plus particulièrement une excellente adhérence aux films de polyéthylène, de polychlorure de vinylidène, d'alcool polyvinylique, de copolymère éthylène-acétate de vinyle, éthylène-alcool vinylique.

Dans chaque cas, la nature des monomères acryliques et/ou du polyester dissipable pourra être adaptée à la nature ou revêtement final, de façon à obtenir l'adhérence la plus élevée possible entre le primaire et le revêtement final. Ainsi, à titre d'exemple, lorsque le revêtement final est de nature métallique (aluminium, par exemple) il est préférable que la partie acrylique du produit résultant de la polymérisation en présence de copolyester sulfoné contienne une quantité suffisante de comonomère à groupe carboxylique libre ; la quantité adéquate est déterminée au moyen d'essais simples dans chaque cas particulier.

L'utilisation des supports composites, selon l'invention, pour préparation de films composites comportant un revêtement final d'application constitue un troisième objet de l'invention.

Les films composites constitués par un support composite, selon l'invention, et un revêtement final d'application constituent un quatrième objet de l'invention.

Les exemple qui suivent, donnés à titre non limitatifs, illustrent l'invention et montrent comment elle peut être mise en pratique.

## Exemple 1

### 1°) Préparation d'un latex polyester sulfoné/monomères acryliques

Dans un réacteur en acier inoxydable à double enveloppe pour circulation d'eau chaude, muni d'un agitateur à ancre, d'un réfrigérant ascendant et d'un dispositif de double introduction des réactifs par pompe, on charge à froid et sous agitation :

- 10 1 d'eau désionisée,
- 0,8 g de vinylsulfonate de sodium,
- 19,8 g d'un émulsifiant (nonylphénol éthoxylé par 30 moles d'éthylèneglycol par mole et sulfoné), vendu sous la marque commerciale AD 33 (Montanoir),
- 330 g d'acétate de vinyle,
- 1650 g d'un copolyester obtenu à partir de :
  - . acide isophtalique ..................... 0,524 mole
  - . téréphtalate de diméthyle ............. 0,348 mole

. sel de sodium de l'ester diméthylique de l'acide sulfo-5 isophtalique ........ 0,128 mole

. éthylèneglycol ........................ 2,3 moles

et présentant un indice de viscosité de 556 mesuré à 25 °C sur une solution à 1 g de polymère pour 100 ml d'un mélange phénol/o-chlorophénol dans un rapport pondéral 50/50, et un poids moléculaire moyen en nombre de 17.000. Ce copolyester a une teneur en diéthylèneglycol de 13 % en poids.

La température du contenu du réacteur est portée à 60 °C, puis on introduit, sous agitation, 33 g de persulfate d'ammonium en solution dans 120 g d'eau désionisée.

La température du contenu du réacteur est portée à 80 °C en 1 h 30 ; on ajoute en continu, en 8 h 30, à partir du moment où la température a atteint 60 °C, un mélange homogène de 3135 g de méthacrylate de méthyle (MAM), 2409 g d'acrylate d'éthyle (AE), 726 g d'acide méthacrylique (AMA), 49,5 g d'acide crotonique et 26,4 g de t-dodécylmercaptan en maintenant la température à 80 °C. On ajoute ensuite en continu, en 8 heures à partir du moment où la température a atteint 80 °C, 26,4 g de persulfate d'ammonium, 33 g d'émulsifiant cité ci-avant, 39,6 g de bicarbonate de sodium dans 1400 ml d'eau. On poursuit la réaction encore 2 heures après la fin de cette addition, puis on refroidit le contenu du réacteur à 20 °C.

On a obtenu de cette façon une émulsion aqueuse stable, à 42,7 % en poids d'extrait sec et dont la taille des particules est de 0,176 micromètre (mesurée sur un appareil de marque commerciale NANO-SIZER de COULTRONIC Ltd). L'extrait sec du latex a la composition pondérale suivante :

- 20 % de polyester sulfoné par rapport à l'extrait sec,
- 36,75 % en poids de méthacrylate de méthyle,
- 28,4 % en poids d'acrylate d'éthyle,
- 8,51 % en poids d'acide méthacrylique,
- 0,5 % d'acide crotonique,
- 3,86 % d'acétate de vinyle.

2°) Préparation d'un film polyester revêtu d'un primaire d'adhérence

Le latex obtenu précédemment est utilisé pour déposer une couche d'ancrage sur un film de polytéréphtalate d'éthylèneglycol (PET) ayant un indice de viscosité de 580. On opère de la façon suivante :

On extrude à raison de 96 kg/h le PET chargé à 0,4 % en poids de kaolinite et chauffé à 275 °C par l'intermédiaire d'une filière à fente de 450 mm de largeur sur un tambour de refroidissement à 35 °C, assurant une vitesse d'extrusion de 6,05 m/min. La nappe obtenue subit un étirage longitudinal, à une température de 75 °C qui réduit sa largeur à 380 mm (vitesse d'étirage 20 m/min ; taux d'étirage 3,2). On dépose alors sur le film monoétiré 0,2 g/m$^2$ du latex obtenu sous 1, au moyen d'un dispositif d'enduction comportant successivement : un rouleau de mise à niveau, un rouleau d'embarrage, un rouleau enducteur tournant à 13 m/min et une barre de lissage tournant à 7 m/min ces deux derniers éléments étant refroidis à 10 °C. Le film enduit passe ensuite dans un appareillage d'étirage transversal de type STENTER comportant une pluralité de zones dans lesquelles la température s'échelonne de 95 °C à 230 °C. Le film enduit est soumis, dans une zone portée à 95-110 °C, à un étirage transversal qui porte sa largeur à 1000 mm environ (taux d'étirage : 3,7). Le film biétiré revêtu est ensuite thermofixé à 225-235 °C puis refroidi et bobiné sous une tension 294 mNewton. Il présente une épaisseur de 36 micromètres.

Afin de vérifier l'amélioration de l'adhérence des revêtements finals au PET apportée par la couche d'ancrage, divers types de tels revêtements finals sont appliqués et des tests d'adhésion pratiqués.

Le dépôt du revêtement est réalisé par couchage manuel au moyen d'un appareil de marque commerciale HAND COATER dont la barre gravée d'enduction est choisie en fonction de la quantité de produit à déposer. Le film enduit est séché pendant deux minutes dans une étuve à 130 °C. Les revêtements suivants ont été réalisés :

Film A

Applications, à raison de 5 g/m$^2$ de produit sec, d'un enduit pour microfilm diazoïque, en solution cétonique, de la Société MESSERLI.

Film B

Enduit pour dessin à base d'alcool polyvinylique réticulé contenant des charges en milieu hydroalcoolique, appliqué à raison de 8 g/m$^2$ de la Société REGMA.

Film C

Enduit de matage pour dessin constitué par une dispersion alcoolique de silice dans un liant acrylique à raison de 6 g/m$^2$.de la Société REGMA.

Film D

Enduit de montage diazoïque à base de dérivés cellulosiques en milieu alcool/cétone, à raison de 6 g/m$^2$ de la Société REGMA.

Les films enduits séchés sont laissés au repos pendant 24 heures, puis on procède aux tests d'arrachage du revêtement au moyen d'un ruban adhésif de marque commerciale MAGIC tape n° 810, de la société MINESOTA MINING MANUFACTURING. La pose du ruban est manuelle et l'arrachage se fait dans des conditions de sévérité croissante :

a) arrachage lent.
b) arrachage rapide.
c) arrachage avec scarification préalable du revêtement final au moyen d'une lame de rasoir.
d) arrachage avec froissage préalable du film.

Pour chaque test la résistance à l'arrachage est notée de 1 (arrachage total aisé), à 10 (tenue parfaite du revêtement). Enfin une note globale de 1 à 10, tenant compte des notes attribuées pour chacune des conditions a) à d) donne une évaluation générale pour chaque film A, B, C et D. Les résultats sont consignés dans le tableau suivant :

TABLEAU I

| FILM | A | B | C | D |
|---|---|---|---|---|
| NOTE GLOBALE | 8 | 8 | 7 | 8 |

On a répété l'exemple précédent avec un latex préparé selon la méthode décrite sous 1, en mettant en oeuvre les mêmes réactifs dans les mêmes proportions à l'exception de l'acide crotonique et de l'acétate de vinyle. On a obtenu des résultats voisins aux tests d'adhésion.

Exemple 2

En opérant comme à l'exemple 1, on a préparé un polyester modifié par les mêmes monomères acryliques pris dans les mêmes proportions (mais en opérant en l'absence du limiteur de chaîne) et en portant le taux de polyester sulfoné dans l'extrait sec à 40 % en poids, puis un film PET comportant un primaire d'adhérence obtenu par application de 0,15 g/m$^2$ de latex, à 45 % d'extrait sec.

On a ensuite appliqué, sur des échantillons du film revêtu, les enduits déposés sur les films B, C et D de l'exemple 1. On a ainsi obtenu les films E, F, G qui ont été soumis aux tests d'adhésion. Les résultats des tests sont consignés dans le tableau suivant :

TABLEAU II

| FILM | E | F | G |
|---|---|---|---|
| NOTE GLOBALE | 9 | 7 | 8 |

Essai comparatif

A titre comparatif, on a procédé à la polymérisation du mélange des monomères acryliques de l'exemple 2, dans les mêmes conditions mais en absence du copolyester sulfoné, on a obtenu de cette façon un latex à 45 % d'extrait sec, dont les particules ont une dimension de 0,19 micromètre et dont la composition pondérale est la suivante :

- MAM : 47,5 %
- AE : 36,1 %
- AMA : 10,6 %

- Acétate de vinyle : 5,6 %

En opérant comme à l'exemple 1, on a préparé un film PET comportant un primaire d'adhérence par dépôt de 0,2 g par $m^2$ du latex acrylique obtenu précédemment. Des échantillons du film obtenu sont revêtus du même revêtement final d'utilisation que celui utilisé pour les films B, C et D de l'exemple 1. On obtient les films E', F' et G' qui sont soumis aux tests d'adhérence comme précédemment. Les résultats en sont consignés dans le tableau ci-après :

TABLEAU III

| FILM | E' | F' | G' |
|---|---|---|---|
| NOTE GLOBAL | 8 | 1 | 3 |

La comparaison des chiffres du tableau III et des chiffres du tableau II fait apparaître que les résultats obtenus avec un primaire acrylique classique sont inférieurs à ceux obtenus avec un copolymère polyester sulfoné/dérivé acrylique.

Exemple 3

On a préparé des latex à 22 % d'extrait sec en diluant les latex mis en oeuvre à l'exemple 2 et des films comportant un primaire d'adhérence par dépôt de la même quantité de latex. On a ensuite déposé sur les films PET les revêtements finals mis en oeuvre pour la films E, F et G, puis soumis les films obtenus : H, I et J et H', I' et J' aux tests d'adhérence. Enfin, on a réalisé des films H", I" et J" en faisant appel à un primaire d'adhérence obtenu par addition au latex témoin utilisé pour les films I', J' et H' d'une quantité du copolyester sulfoné de l'exemple 1 correspondant à une teneur pondérale par rapport au. produit sec du latex de 20 %. On a obtenu les résultats consignés dans le tableau IV.

TABLEAU IV

| | Exemple 3 | | | Essai comparatif II | | | Essai comparatitif III | | |
|---|---|---|---|---|---|---|---|---|---|
| FILM | H | I | J | H' | I' | J' | H" | I" | J" |
| NOTE GLOBALE | 6 | 3 | 7 | 1 | 1 | 1 | 5 | 2 | 2 |

Exemple 4

On a préparé un latex polyester sulfoné/monomère acrylique selon le procédé de l'exemple 1 et avec les mêmes proportions de réactif et d'adjuvant mais en présence de 0,6 % en poids par rapport aux monomères de tertiododécylmercaptan comme limiteur de chaîne. Le latex obtenu contient 45 % en poids d'extrait sec. Le polymère présente une dimension de particule de 0,18 micromètre.

En utilisant les différentes étapes de l'exemple 1, on a préparé des films revêtus du primaire d'adhérence (0,15 g/$m^2$) et des revêtements finals d'utilisation mis en oeuvre pour les films A, B, C, D. Les films K, L, M et N obtenus ont été soumis aux mêmes tests d'adhérence dont les résultats figurent dans le tableau V.

TABLEAU V

| FILM | K | L | M | N |
|---|---|---|---|---|
| NOTE GLOBALE | 10 | 10 | 8 | 8 |

Exemple 5

On a préparé un latex polyester sulfoné/monomère acrylique selon le procédé de l'exemple 1 et avec les mêmes proportions de réactifs et d'adjuvants, mais en opérant en présence de 3 % en poids par rapport aux monomères de diméthacrylate d'éthylèneglycol et en l'absence du limiteur de chaîne. Le latex obtenu contient 45 % en poids d'extrait sec. Le polymère présente une dimension de particule de 0,16 micromètre.

En utilisant les différentes étapes de l'exemple 1, on a préparé des films revêtus du primaire d'adhérence (0,2 g/m$^2$) et des revêtements finals d'utilisation mis en oeuvre pour les films A, B, C, D. Les films O, P, Q et R obtenus ont été soumis aux mêmes tests d'adhérence dont les résultats figurent dans le tableau VI.

TABLEAU VI

| FILM | O | P | Q | R |
|---|---|---|---|---|
| NOTE GLOBAL | 10 | 9 | 7 | 8 |

Exemple 6

On a préparé un latex polyester sulfoné/monomère acrylique selon le procédé de l'exemple 1 et avec les mêmes proportions de réactif et d' adjuvant, mais auquel on a rajouté 10 % en poids par rapport au latex d'un polycondensat mélamine/formol vendu sous la marque commerciale PROX FU par la société PROTEX. Le latex obtenu contient 45 % en poids d'extrait sec. Le polymère présente une dimension de particule de 0,13 micromètre.

En utilisant les différentes étapes de l'exemple 1, on a préparé des films revêtus du primaire d'adhérence (0,15 g/m$^2$) et des revêtements finals d' utilisation mis en oeuvre pour les films A, B, C, D. Les films R, S, T et U obtenus ont été soumis aux mêmes tests d'adhérence dont les résultats figurent dans le tableau VII.

TABLEAU VII

| FILM | R | S | T | U |
|---|---|---|---|---|
| NOTE GLOBALE | 10 | 7 | 10 | 9 |

Exemple 7

On a préparé le même latex polyester sulfoné/monomères acryliques à 22 % d'extrait sec qu'à l'exemple 3 auquel on a rajouté 10 % en poids du même polycondensat mélamine/formol qu'à l'exemple 6.

En utilisant les différentes étapes de l'exemple 1, on a préparé des films revêtus du primaire d'adhérence (0,29 g/m$^2$) et des revêtements finals d'utilisation utilisés pour obtenir les films I et J de l'exemple 3. Les films V et W ainsi préparés ont été soumis aux tests d'adhérence déjà décrits. Les résultats obtenus sont consignés dans le tableau VIII.

Essai comparatif

A titre comparatif, on a ajouté au latex acrylique utilisé pour la préparation des films H', I' et J' de l'essai comparatif I, une quantité suffisante du copolymère copolyester sulfoné/monomères acryliques pour

que la teneur en copolyester sulfoné soit de 20 % en poids par rapport à l'extrait sec et 10 % en poids du polycondensat mélamine/formol utilisé précédemment. En procédant comme précédemment, on a obtenu les films V', W' soumis aux mêmes tests d'adhérence que les films V, et W. Les résultats sont consignés dans le tableau VIII.

TABLEAU VIII

| | Exemple 7 | | Essai comparatif IV | |
|---|---|---|---|---|
| FILM | V | W | V' | W' |
| NOTE GLOBALE | 8 | 7 | 4 | 2 |

Exemple 8

On a préparé un latex polyester sulfoné/monomères acryliques selon le procédé de l'exemple 1 après avoir ajouté au mélange des monomères acryliques de la N-méthylolméthacrylamide (3 % en poids).

Le latex obtenu contient 43 % en poids d'extrait sec.

En utilisant les différentes étapes décrites à l'exemple 1, on a préparé des films revêtus du primaire d'adhérence (0,15 g/m$^2$) et des revêtements finals d'utilisation mis en oeuvre pour les films A, B, C et D. Les films, X, Y, Z et $Z_1$ obtenus ont été soumis aux mêmes tests d'adhérence dont les résultats figurent dans le tableau IX.

TABLEAU IX

| FILM | X | Y | Z | $Z_1$ |
|---|---|---|---|---|
| NOTE GLOBALE | 10 | 7 | 8 | 8 |

Exemple 9

En opérant selon le procédé décrit à l'exemple 1, on a préparé un film support en polytéréphtalate d'éthylène glycol de 12 micromètres d'épaisseur revêtu du primaire d'adhérence décrit à l'exemple 5. Le film revêtu ainsi obtenu a été utilisé pour préparer des films composites destinés à l'emballage par collage au moyen de trois colles polyuréthannes différentes, sur la face revêtue du film support, d'un film de polyéthylène. On a découpé dans le film composite obtenu des éprouvettes de 15 mm de largeur sur lesquelles on a procédé à des essais de séparation des films polyester et polyéthylène.

Pour ces essais, le décollage des deux films est amorcée au moyen d'acétate d'éthyle, d'une part dans le sens longitudinal et d'autre part dans le sens transversal. Après séchage des éprouvettes, chaque amorce de chaque éprouvette est fixé dans les mors d'un dispositif de traction exerçant une force d'arrachage sur les amorces. Les mors se déplacent à une vitesse de 300 mm/min, selon une direction perpendiculaire au plan de l'éprouvette. On note la force exercée en mN pour provoquer un délaminage de 15 mm du film composite. On a utilisé les colles suivantes (marques commerciales).

ADCOTE 301/350 de MORTON (essai A)

LIOFOL® 2850/5000 de HENKEL (essai B)

WIKOLIN 691A/691C (essai C)

A titre comparatif, on a répété ces essais sur des films composites obtenus sans primaire d'adhérence (essais A', B' et C'). On a obtenu les résultats suivants :

| Essais | A | | A' | | B | | B' | | C | | C' | |
|---|---|---|---|---|---|---|---|---|---|---|---|---|
| | (1) L | (1) T | L. | T | L | T | L | T | L | T | L | T |
| Force de délaminage en mN | 2943 | 2747 | 1766 | 1766 | 2943 | 1962 | 1275 | 785 | 2747 | 2354 | 1373 | 2158 |

(1) T : sens transversal
L : sens longitudinal

Exemple 10 :

En opérant comme à l'exemple 1, on a enduit, après traitement corona, un film polyester de 12 micromètres d'épaisseur à l'aide des latex décrits aux exemples 2, 4 et 5 et d'une solution obtenue par dilution à l'eau du latex de l'exemple 4 de façon à amener sa concentration en extrait sec à 20 % en poids puis neutralisation à l'ammoniaque. Dans chaque cas, on a déposé 0,2 g/m$^2$ d'extrait sec sur une des faces du film polyester. On a obtenu de cette façon les films à revêtements primaires référencés FP1, FP2, FP3 et FP4. Ces quatre films ont été soumis à une impression sur la couche primaire, d'une part, à l'aide d'une encre blanche de marque commerciale CTSW2 S/8662 de la Société LORILLEUX (impression à plat), d'autre part à une impression en superposition de l'encre blanche précédente et d'une encre bleue de marque commerciale CTSW2 S/8656 de LORILLEUX. On a ainsi obtenu les films imprimés référencés FI 1 ; FI 2 ; FI 3 ; FI 4 ; FI 5 ; FI 6 ; FI 7 ; FI 8.

L'impression a été réalisée dans les conditions suivantes

- machine d'impression de marque commerciale : ROTOVAMOSER ;
- impression : HELIOGRAVURE;
- gravure : AUTOTYPIQUE ;
- presseurs : 55° shores ;
- température des caissons : 100° C ;
- vitesse de tirage : 100m/min.

Les films imprimés ont ensuite été complexés de manière connue avec un film de polyéthylène de 60 micromètres d'épaisseur après dépôt sur la couche imprimée d'une colle de marque commerciale ADCOTE 76C 301A/350A de la Société MORTON (2 g/m$^2$).

A titre comparatif, on a imprimé puis complexé le film polyester support de départ exempt de couche primaire selon le mode opératoire décrit précédemment. On a obtenu les films imprimés complexés témoins référence FIT-1 et FIT-2.

Dans les films ainsi obtenus on a découpé des éprouvettes de 15 mm de longueur sur lesquelles on a procédé à des mesures de la force de délaminage des films complexes en utilisant un appareil de marque commerciale LHOMARGY avec une vitesse de délaminage de 200m/min selon le mode opératoire décrit à l'exemple 9; on a obtenu les résultats consignés dans le tableau ci-après dans lequel le premier chiffre indique la valeur de la force de délaminage en grammes dans le sens longitudinal et le second la valeur dans le sens transversal.

| FILMS | FI-1 | FI-2 | FI-3 | FI-4 | FI-5 | FI-6 | FI-7 | FI-8 | FIT-1 | FIT-2 |
|---|---|---|---|---|---|---|---|---|---|---|
| Force de délaminage en mN | 7848<br>>7848 | 6867<br>>5886 | 4905<br>5886 | 6867<br>7848 | 5395<br>5395 | 4905<br>4905 | 392<br>3920 | 5886<br>4905 | <98,1<br><98,1 | <98,1<br><98,1 |

Exemple 11 :

On a préparé des films imprimés et complexés par impression des films a revêtement primaire FP1 à FP4 décrits précédemment à l'aide d'une encre blanche de marque commerciale SICPANYL 50 920 de la Société SICPA d'une part et à l'aide d'une superposition d'une encre rouge SICPANYL 68 840 à l'encre blanche d'autre part. L'impression a été réalisée sur une machine de marque commerciale NETCHICH avec un cylindre de 40 micromètres. On a obtenu les films imprimés FI-9 à FI-16 sur lesquels on a déposé un film de polyéthylène de 60 micromètres après enduction de la face imprimée à l'aide de la colle ADCOTE 301/350A. On a ainsi obtenu les films imprimés complexés référencés FI-9 à FI-16.

A titre comparatif, on a procédé à l'impression et au complexage, dans les mêmes conditions, du film polyester sans revêtement primaire pour obtenir deux films témoins FIT-3 et FIT-4.

Des mesures de la force de délaminage de ces films composites ont été effectuées dans les conditions décrites à l'exemple précédent. Les résultats sont consignés dans le tableau ci-après.

| FILMS | FI-9 | FI-10 | FI-11 | FI-12 | FI-13 | FI-14 | FI-15 | FI-16 | FIT-3 | FIT-4 |
|---|---|---|---|---|---|---|---|---|---|---|
| Force de délaminage en mN | 883 | 1177<br>1275 | 1177<br>1275 | 687<br>785 | 1471<br>1668 | 1461<br>1569 | 1962<br>2158 | 1864<br>1962 | 196 | 196 |

Exemple 12 :

En opérant comme à l'exemple 11, on a préparé des films imprimés et complexés à du polyéthylène après avoir remplacé les encres SICPANYL 50 920 et 68 840 respectivement par les encres UNIPLEX 79 900 (blanche) et 79 960 (bleue) de la Société SICPA. On a obtenu les films imprimés blancs référencés FI-17 à FI-20 et blanc-bleu superposés FI-21 à FI-24 ainsi que les témoins FIT-5 et FIT-6.

Les forces de délaminage déterminées comme à l'exemple 10 figurent dans le tableau suivant :

| FILMS | FI-17 | FI-18 | FI-19 | FI-20 | FIT-5 | FI-21 | FI-22 | FI-23 | FI-24 | FIT-6 |
|---|---|---|---|---|---|---|---|---|---|---|
| Force de délaminage en mN | 4905<br>5886 | 5003<br>5199 | 5395<br>5493 | 5101<br>5297 | 2155<br>2452 | 4905<br>5101 | 5101<br>5199 | 3920<br>4905 | 5297<br>5395 | 4316<br>4414 |

**Revendications**

**Revendications pour les Etats contractants suivants : BE, CH, DE, FR, GB, IT, LI, LU, NL, SE**

1. Procédé d'obtention d'un film orienté en polyester linéaire comportant, sur au moins une de leur face, un revêtement primaire d'adhérence améliorant l'adhérence du film à un revêtement final d'application, caractérisé en ce que l'on dépose, sur au moins une des faces d'un film polyester support, une couche d'une composition aqueuse d'un polymère modifié obtenu par polymérisation radicalaire, en phase aqueuse, d'au moins un monomère de nature acrylique de formule générale :

$$CH_2=C(R)-Y \quad (II)$$

dans laquelle :

- R représente un atome d'hydrogène ou un groupe alkyle comportant de 1 à 4 atomes de carbone, éventuellement substitué par un groupe hydroxyle ;
- Y représente un groupe fonctionnel hydroxycarbonyle ; alkoxycarbonyle de formule $-COOR_1$ dans laquelle $R_1$ est un radical alkyle comportant de 1 à 20 atomes de carbone, linéaire ou ramifié (éventuellement substitué par un reste hydroxyle) ; nitrile ; amide de formule $-CON(R_2,R_3)$ dans laquelle $R_2$ et $R_3$, identiques ou différents représentent un atome d'hydrogène ou un reste alkyle linéaire ou ramifié, comportant de 1 à 20 atomes de carbone, l'un des radicaux $R_2$ et $R_3$ pouvant, en outre, représenter un radical hydroxyalkyle dans lequel le reste alkyle, linéaire ou ramifié, comporte de 1 à 20 atomes de carbone

en présence d'un polyester dissipable dans l'eau dérivé d'au moins un acide dicarboxylique aromatique, d'au moins un diol aliphatique et comportant une pluralité de groupes sulfonyloxy de formule générale :

$-SO_3M_n$ (I)

dans laquelle

M représente :

- un atome d'hydrogène
- un métal alcalin ou alcalino-terreux
- un reste ammonium
- un reste ammonium quaternaire

n est égal à 1 ou, lorsque M est un métal alcalino-terreux, à $\frac{1}{2}$,

ledit polyester dissipable représentant au moins 5 % à 60 % en poids du total polyester dissipable/-(co)polymère acrylique.

2. Procédé selon la revendication 1, caractérisé en ce que le polyester dissipable mis en oeuvre est un copolyester comportant une pluralité de motifs dérivés d'au moins deux acides dicarboxyliques dont l'un comporte au moins un groupe sulfonyloxy dans sa molécule et une pluralité de motifs dérivés d'au moins un diol aliphatique.

3. Procédé selon la revendication 2, caractérisé en ce que le nombre de motifs dérivés d'un acide dicarboxylique à groupe sulfonyloxy pour un total de 100 motifs dérivés d'acides dicarboxyliques est de 5 à 30.

4. Procédé selon l'une quelconque des revendications 1 à 3, caractérisé en ce que le polyester dissipable est un copolyester comportant une pluralité de motifs dérivés d'au moins un acide dicarboxylique non sulfoné pris dans le groupe des acides téréphtalique, isophtalique et phtalique.

5. Procédé selon la revendication 4, caractérisé en ce que le polyester dissipable est un copolyester comportant une pluralité de motifs dérivés des acides téré et isophtaliques.

6. Procédé selon la revendication 5, caractérisé en ce que le polyester dissipable est un copolyester dans lequel le nombre de motifs téréphtalate représente de 20 à 99 % du nombre total des motifs téréphtalate et isophtalate.

7. Procédé selon l'une quelconque des revendications 2 à 6, caractérisé en ce que le polyester dissipable dans l'eau comporte une pluralité de motifs dérivés de l'acide sulfo-5 isophtalique.

8. Procédé selon l'une quelconque des revendications 1 à 7, caractérisé en ce que le polyester dissipable comporte une pluralité de motifs dérivés d'au moins un diol aliphatique pris dans le groupe de l'éthylèneglycol et de ses oligomères de formule $HO-(CH_2-CH_2-O-)_nH$ dans laquelle n est un nombre entier de 2 à 10.

9. Procédé selon l'une quelconque des revendications 1 à 8, caractérisé en ce que le monomère acrylique est pris dans le groupe formé par les acrylate et méthacrylate de méthyle, les acrylate et méthacrylate d'éthyle, les acides acrylique et méthacrylique, les acrylamide et méthacrylamide, le N-méthylolacrylamide et le N-méthylolméthacrylamide.

10. Procédé selon l'une quelconque des revendications 1 à 9, caractérisé en ce qu'un ou plusieurs monomères éthyléniques non acryliques sont associés au monomère acrylique, en une proportion inférieure ou égale à 20 % en moles dudit monomère acrylique.

11. Procédé selon l'une quelconque des revendications 1 à 10, caractérisé en ce que le polymère modifié polyester dissipable/(co)polymère acrylique est mis en oeuvre sous forme d'une dispersion aqueuse.

12. Procédé selon l'une quelconque des revendications 1 à 10, caractérisé en ce que le polymère modifié est mis en oeuvre sous forme d'une solution aqueuse obtenue par neutralisation à l'aide d'une base alcaline des groupes acides carboxyliques libres présents dans le polymère modifié de la dispersion aqueuse.

13. Procédé selon l'une quelconque des revendications 1 à 12, caractérisé en ce que l'on ajoute de 0,1 à 15 % en poids par rapport au polymère modifié d'un agent réticulant pris dans le groupe formé par les résines phénol/formol et amine/formol.

14. Procédé selon l'une quelconque des revendications 1 à 13, caractérisé en ce que l'on dépose sur au moins une des faces du film polyester support de 0,01 à 0,5 g/$m^2$ de polymère modifié polyester dissipable/(co)polymère acrylique.

15. Procédé selon l'une quelconque des revendications 1 à 14, caractérisé en ce que le film polyester est un film en polytéréphtalate d'éthylèneglycol ayant une épaisseur de 5 à 300 micromètres.

16. Procédé selon l'une quelconque des revendications 1 à 15, caractérisé en ce que le revêtement du film polyester est réalisé par enduction à l'aide d'une composition aqueuse de polymère modifié avant tout étirage ou entre deux étirages du film dans des directions perpendiculaires.

17. Film polyester composite constitué d'un film orienté en polyester linéaire support comportant, sur l'une au moins de ses faces, un revêtement primaire d'adhérence et un revêtement final d'application, caractérisé en ce que le revêtement primaire d'adhérence est constitué par un polymère modifié polyester dissipable/(co)polymère acrylique selon l'une quelconque des revendications 1 à 12.

18. Film selon la revendication 17, caractérisé en ce que le revêtement final est un film de polyéthylène.

19. Film selon la revendication 17, caractérisé en ce que le revêtement final est une encre d'impression.

20. Film selon la revendication 17, caractérisé en ce que le revêtement final est une couche métallique.

21. Film selon la revendication 17, caractérisé en ce que le revêtement final est un enduit à base d'alcool polyvinylique.

22. Film selon la revendication 17, caractérisé en ce que le revêtement final est un enduit à base de polymère acrylique.

23. Film selon la revendication 17, caractérisé en ce que le revêtement final est un enduit cellulosique.

**Revendications pour les Etats contractants suivants : AT, ES**

1. Procédé d'obtention d'un film orienté en polyester linéaire comportant, sur au moins une de leur face, un revêtement primaire d'adhérence améliorant l'adhérence du film à un revêtement final d'application, caractérisé en ce que l'on dépose, sur au moins une des faces d'un film polyester support, une couche d'une composition aqueuse d'un polymère modifié obtenu par polymérisation radicalaire, en phase aqueuse, d'au moins un monomère de nature acrylique de formule générale :

$$CH_2=\overset{\displaystyle R}{\overset{|}{C}}-Y \qquad (II)$$

dans laquelle :

- R représente un atome d'hydrogène ou un groupe alkyle comportant de 1 à 4 atomes de carbone, éventuellement substitué par un groupe hydroxyle ;
- Y représente un groupe fonctionnel hydroxycarbonyle ; alkoxycarbonyle de formule $-COOR_1$ dans laquelle $R_1$ est un radical alkyle comportant de 1 à 20 atomes de carbone, linéaire ou ramifié (éventuellement substitué par un reste hydroxyle) ; nitrile ; amide de formule $-CON(R_2,R_3)$ dans laquelle $R_2$ et $R_3$, identiques ou différents représentent un atome d'hydrogène ou un reste alkyle linéaire ou ramifié, comportant de 1 à 20 atomes de carbone, l'un des radicaux $R_2$ et $R_3$ pouvant, en outre, représenter un radical hydroxyalkyle dans lequel le reste alkyle, linéaire ou ramifié, comporte de 1 à 20 atomes de carbone

en présence d'un polyester dissipable dans l'eau dérivé d'au moins un acide dicarboxylique aromatique, d'au moins un diol aliphatique et comportant une pluralité de groupes sulfonyloxy de formule générale :

$-SO_3M_n$   (I)

dans laquelle

M représente :

- un atome d'hydrogène
- un métal alcalin ou alcalino-terreux
- un reste ammonium
- un reste ammonium quaternaire

n est égal à 1 ou, lorsque M est un métal alcalino-terreux, a $\frac{1}{2}$,

ledit polyester dissipable représentant 5 % à 60 % en poids du total polyester dissipable/(co)polymère acrylique.

**2.** Procédé selon la revendication 1, caractérisé en ce que le polyester dissipable mis en oeuvre est un copolyester comportant une pluralité de motifs dérivés d'au moins deux acides dicarboxyliques dont l'un comporte au moins un groupe sulfonyloxy dans sa molécule et une pluralité de motifs dérivés d'au moins un diol aliphatique.

**3.** Procédé selon la revendication 2, caractérisé en ce que le nombre de motifs dérivés d'un acide dicarboxylique à groupe sulfonyloxy pour un total de 100 motifs dérivés d'acides dicarboxyliques est de 5 à 30.

**4.** Procédé selon l'une quelconque des revendications 1 à 3, caractérisé en ce que le polyester dissipable est un copolyester comportant une pluralité de motifs dérivés d'au moins un acide dicarboxylique non sulfoné pris dans le groupe des acides téréphtalique, isophtalique et phtalique.

**5.** Procédé selon la revendication 4, caractérisé en ce que le polyester dissipable est un copolyester comportant une pluralité de motifs dérivés des acides téré et isophtaliques.

**6.** Procédé selon la revendication 5, caractérisé en ce que le polyester dissipable est un copolyester dans lequel le nombre de motifs téréphtalate représente de 20 à 99 % du nombre total des motifs téréphtalate et isophtalate.

**7.** Procédé selon l'une quelconque des revendications 2 à 6, caractérisé en ce que le polyester dissipable dans l'eau comporte une pluralité de motifs dérivés de l'acide sulfo-5 isophtalique.

**8.** Procédé selon l'une quelconque des revendications 1 à 7, caractérisé en ce que le polyester dissipable comporte une pluralité de motifs dérivés d'au moins un diol aliphatique pris dans le groupe de l'éthylèneglycol et de ses oligomères de formule $HO-(CH_2-CH_2-O-)_nH$ dans laquelle n est un nombre entier de 2 à 10.

**9.** Procédé selon l'une quelconque des revendications 1 à 8, caractérisé en ce que le monomère acrylique est pris dans le groupe formé par les acrylate et méthacrylate de méthyle, les acrylate et méthacrylate d'éthyle, les acides acrylique et méthacrylique, les acrylamide et méthacrylamide, le N-méthylolacrylamide et le N-méthylolméthacrylamide.

**10.** Procédé selon l'une quelconque des revendications 1 à 9, caractérisé en ce qu'un ou plusieurs monomères éthyléniques non acryliques sont associés au monomère acrylique, en une proportion inférieure ou égale à 20 % en moles dudit monomère acrylique.

**11.** Procédé selon l'une quelconque des revendications 1 à 10, caractérisé en ce que le polymère modifié polyester dissipable/(co)polymère acrylique est mis en oeuvre sous forme d'une dispersion aqueuse.

**12.** Procédé selon l'une quelconque des revendications 1 à 10, caractérisé en ce que le polymère modifié est mis en oeuvre sous forme d'une solution aqueuse obtenue par neutralisation à l'aide d'une base alcaline des groupes acides carboxyliques libres présents dans le polymère modifié de la dispersion aqueuse.

**13.** Procédé selon l'une quelconque des revendications 1 à 12, caractérisé en ce que l'on ajoute de 0,1 à 15 % en poids par rapport au polymère modifié d'un agent réticulant pris dans le groupe formé par les résines phénol/formol et amine/formol.

**14.** Procédé selon l'une quelconque des revendications 1 à 13, caractérisé en ce que l'on dépose sur au moins une des faces du film polyester support de 0,01 à 0,5 g/m$^2$ de polymère modifié polyester dissipable/(co)polymère acrylique.

**15.** Procédé selon l'une quelconque des revendications 1 à 14, caractérisé en ce que le film polyester est un film en polytéréphtalate d'éthylèneglycol ayant une épaisseur de 5 à 300 micromètres.

**16.** Procédé selon l'une quelconque des revendications 1 à 15, caractérisé en ce que le revêtement du film polyester est réalisé par enduction à l'aide d'une composition aqueuse de polymère modifié avant tout étirage ou entre deux étirages du film dans des directions perpendiculaires.

**Claims**

**Claims for the following Contracting States : BE, CH, DE, FR, GB, IT, LI, LU, NL, SE**

**1.** Process for producing an oriented film made of linear polyester comprising, on at least one of its faces, an adhesive primer coating improving the adhesiveness of the film to a final application coating, characterised in that there is deposited, on at least one of the faces of a polyester base film, a layer of an aqueous composition of a modified polymer produced by aqueous phase radical polymerisation of at least one monomer of acrylic nature of general formula:

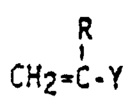

(II)

in which:

- R denotes a hydrogen atom or an alkyl group containing from 1 to 4 carbon atoms, optionally substituted by a hydroxyl group;
- Y denotes a functional group which is hydroxycarbonyl, alkoxycarbonyl of formula -COOR$_1$ in which R$_1$ is a linear or branched alkyl radical containing from 1 to 20 carbon atoms (optionally substituted by a hydroxyl residue), nitrile, amide of formula -CON(R$_2$, R$_3$) in which R$_2$ and R$_3$, which are identical or different, denote a hydrogen atom or a linear or branched alkyl residue containing from 1 to 20 carbon atoms, it being possible for one of the radicals R$_2$ and R$_3$, moreover, to denote a hydroxyalkyl radical in which the linear or branched alkyl residue contains from 1 to 20 carbon atoms

in the presence of a water-dispersible polyester derived from at least one aromatic dicarboxylic acid

and at least one aliphatic diol and containing a plurality of sulphonyloxy groups of general formula:

$-SO_3M_n$ (I)

in which

M denotes:

- a hydrogen atom
- an alkali or alkaline-earth metal
- an ammonium residue or
- a quaternary ammonium residue

and n is equal to 1 or, when M is an alkaline-earth metal, to 1/2, the said dispersible polyester representing at least 5 % to 60 % by weight of the total dispersible polyester/acrylic (co)polymer.

2. Process according to Claim 1, characterised in that the dispersible polyester employed is a copolyester containing a plurality of units derived from at least two dicarboxylic acids, one of which contains at least one sulphonyloxy group in its molecule, and a plurality of units derived from at least one aliphatic diol.

3. Process according to Claim 2, characterised in that the number of units derived from a dicarboxylic acid containing a sulphonyloxy group is from 5 to 30 for a total of 100 units derived from dicarboxylic acids.

4. Process according to any one of Claims 1 to 3, characterised in that the dispersible polyester is a copolyester containing a plurality of units derived from at least one unsulphonated dicarboxylic acid taken from the group of terephthalic, isophthalic and phthalic acids.

5. Process according to Claim 4, characterised in that the dispersible polyester is a copolyester containing a plurality of units derived from tere- and isophthalic acids.

6. Process according to Claim 5, characterised in that the dispersible polyester is a copolyester in which the number of terephthalate units represents from 20 to 99 % of the total number of the terephthalate and isophthalate units.

7. Process according to any one of Claims 2 to 6, characterised in that the water-dispersible polyester contains a plurality of units derived from 5-sulphoisophthalic acid.

8. Process according to any one of Claims 1 to 7, characterised in that the dispersible polyester contains a plurality of units derived from at least one aliphatic diol taken from the group of ethylene glycol and of its oligomers of formula $HO-(CH_2-CH_2-O-)_nH$, in which n is an integer from 2 to 10.

9. Process according to any one of Claims 1 to 8, characterised in that the acrylic monomer is taken from the group consisting of methyl acrylate and methacrylate, ethyl acrylate and methacrylate, acrylic and methacrylic acid, acrylamide and methacrylamide, N-methylolacrylamide and N-methylolmethacrylamide.

10. Process according to any one of Claims 1 to 9, characterised in that one or more nonacrylic ethylenic monomers are used in combination with the acrylic monomer, in a proportion lower than or equal to 20 mol % of the said acrylic monomer.

11. Process according to any one of Claims 1 to 10, characterised in that the modified dispersible polyester/acrylic (co)polymer polymer is used in the form of an aqueous dispersion.

12. Process according to any one of Claims 1 to 10, characterised in that the modified polymer is used in the form of an aqueous solution produced by neutralising with an alkaline base the free carboxylic acid groups present in the modified polymer of the aqueous dispersion.

13. Process according to any one of Claims 1 to 12, characterised in that from 0.1 to 15 % by weight, based on the modified polymer, of a crosslinking agent taken from the group consisting of phenol/formaldehyde and amine/formaldehyde resins is added.

14. Process according to any one of Claims 1 to 13, characterised in that from 0.01 to 0.15 g/m$^2$ of modified dispersible polyester/acrylic (co)polymer polymer is deposited on at least one of the faces of the polyester base film.

15. Process according to any one of Claims 1 to 14, characterised in that the polyester film is a polyethylene terephthalate film with a thickness of 5 to 300 micrometres.

16. Process according to any one of Claims 1 to 15, characterised in that the coating of the polyester film is produced by coating with an aqueous composition of modified polymer before any drawing or between two drawing operations on the film in perpendicular directions.

17. Composite polyester film consisting of an oriented base film made of linear polyester comprising, on at least one of its faces, an adhesive primer coating and a final application coating, characterised in that the adhesive primer coating consists of a modified dispersible polyester/acrylic (co)polymer polymer according to any one of Claims 1 to 12.

18. Film according to Claim 17, characterised in that the final coating is a film of polyethylene.

19. Film according to Claim 17, characterised in that the final coating is a printing ink.

20. Film according to Claim 17, characterised in that the final coating is a metal layer.

21. Film according to Claim 17, characterised in that the final coating is a coating based on polyvinyl alcohol.

22. Film according to Claim 17, characterised in that the final coating is a coating based on acrylic polymer.

23. Film according to Claim 17, characterised in that the final coating is a cellulosic coating.

**Claims for the following Contracting States : AT, ES**

1. Process for producing an oriented film made of linear polyester comprising, on at least one of its faces, an adhesive primer coating improving the adhesiveness of the film to a final application coating, characterised in that there is deposited, on at least one of the faces of a polyester base film, a layer of an aqueous composition of a modified polymer produced by aqueous phase radical polymerisation of at least one monomer of acrylic nature of general formula:

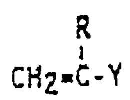

(II)

in which:
- R denotes a hydrogen atom or an alkyl group containing from 1 to 4 carbon atoms, optionally substituted by a hydroxyl group;
- Y denotes a functional group which is hydroxycarbonyl, alkoxycarbonyl of formula $-COOR_1$ in which $R_1$ is a linear or branched alkyl radical containing from 1 to 20 carbon atoms (optionally substituted by a hydroxyl residue), nitrile, amide of formula $-CON(R_2, R_3)$ in which $R_2$ and $R_3$, which are identical or different, denote a hydrogen atom or a linear or branched alkyl residue containing from 1 to 20 carbon atoms, it being possible for one of the radicals $R_2$ and $R_3$, moreover, to denote a hydroxyalkyl radical in which the linear or branched alkyl residue contains from 1 to 20 carbon atoms

in the presence of a water-dispersible polyester derived from at least one aromatic dicarboxylic acid and at least one aliphatic diol and containing a plurality of sulphonyloxy groups of general formula:

$-SO_3M_n$ (I)

in which

M denotes:

- a hydrogen atom
- an alkali or alkaline-earth metal
- an ammonium residue or
- a quaternary ammonium residue

and n is equal to 1 or, when M is an alkaline-earth metal, to 1/2, the said dispersible polyester representing at least 5 % to 60 % by weight of the total dispersible polyester/acrylic (co)polymer.

**2.** Process according to Claim 1, characterised in that the dispersible polyester employed is a copolyester containing a plurality of units derived from at least two dicarboxylic acids, one of which contains at least one sulphonyloxy group in its molecule, and a plurality of units derived from at least one aliphatic diol.

**3.** Process according to Claim 2, characterised in that the number of units derived from a dicarboxylic acid containing a sulphonyloxy group is from 5 to 30 for a total of 100 units derived from dicarboxylic acids.

**4.** Process according to any one of Claims 1 to 3, characterised in that the dispersible polyester is a copolyester containing a plurality of units derived from at least one unsulphonated dicarboxylic acid taken from the group of terephthalic, isophthalic and phthalic acids.

**5.** Process according to Claim 4, characterised in that the dispersible polyester is a copolyester containing a plurality of units derived from tere- and isophthalic acids.

**6.** Process according to Claim 5, characterised in that the dispersible polyester is a copolyester in which the number of terephthalate units represents from 20 to 99 % of the total number of the terephthalate and isophthalate units.

**7.** Process according to any one of Claims 2 to 6, characterised in that the water-dispersible polyester contains a plurality of units derived from 5-sulphoisophthalic acid.

**8.** Process according to any one of Claims 1 to 7, characterised in that the dispersible polyester contains a plurality of units derived from at least one aliphatic diol taken from the group of ethylene glycol and of its oligomers of formula $HO-(CH_2-CH_2-O-)_nH$, in which n is an integer from 2 to 10.

**9.** Process according to any one of Claims 1 to 8, characterised in that the acrylic monomer is taken from the group consisting of methyl acrylate and methacrylate, ethyl acrylate and methacrylate, acrylic and methacrylic acid, acrylamide and methacrylamide, N-methylolacrylamide and N-methylolmethacrylamide.

**10.** Process according to any one of Claims 1 to 9, characterised in that one or more nonacrylic ethylenic monomers are used in combination with the acrylic monomer, in a proportion lower than or equal to 20 mol % of the said acrylic monomer.

**11.** Process according to any one of Claims 1 to 10, characterised in that the modified dispersible polyester/acrylic (co)polymer polymer is used in the form of an aqueous dispersion.

**12.** Process according to any one of Claims 1 to 10, characterised in that the modified polymer is used in the form of an aqueous solution produced by neutralising with an alkaline base the free carboxylic acid groups present in the modified polymer of the aqueous dispersion.

**13.** Process according to any one of Claims 1 to 12, characterised in that from 0.1 to 15 % by weight, based on the modified polymer, of a crosslinking agent taken from the group consisting of phenol/formaldehyde and amine/formaldehyde resins is added.

**14.** Process according to any one of Claims 1 to 13, characterised in that from 0.01 to 0.5 g/m$^2$ of modified dispersible polyester/acrylic (co)polymer polymer is deposited on at least one of the faces of the

polyester base film.

15. Process according to any one of Claims 1 to 14, characterised in that the polyester film is a polyethylene terephthalate film with a thickness of 5 to 300 micrometres.

16. Process according to any one of Claims 1 to 15, characterised in that the coating of the polyester film is produced by coating with an aqueous composition of modified polymer before any drawing or between two drawing operations on the film in perpendicular directions.

## Patentansprüche

### Patentansprüche für folgende Vertragsstaaten : BE, CH, DE, FR, GB, IT, LI, LU, NL, SE

1. Verfahren zur Gewinnung eines orientierten Films aus linearem Polyester, der auf zumindest einer seiner Oberflächen eine primäre Haftbeschichtung enthält, die die Haftung des Films an einer Endbeschichtung für die Anwendung verbessert, dadurch gekennzeichnet, daß man auf zumindest einer der Oberflächen eines Polyesterfilmträgers eine Schicht einer wäßrigen Zusammensetzung eines modifizierten Polymeren aufbringt, erhalten durch radikalische Polymerisation in wäßriger Phase zumindest eines Monomeren acrylischer Natur der allgemeinen Formel

$$CH_2 = \overset{R}{\overset{|}{C}} - Y \qquad (II)$$

worin

R für ein Wasserstoffatom oder eine Alkylgruppe mit 1 bis 4 Kohlenstoffatomen, die gegebenenfalls durch eine Hydroxylgruppe substituiert ist, steht,

Y eine funktionelle Hydroxycarbonylgruppe; Alkoxycarbonyl der Formel $-COOR_1$, worin $R_1$ ein linearer oder verzweigter (gegebenenfalls durch einen Hydroxylrest substituierter) Alkylrest mit 1 bis 20 Kohlenstoffatomen ist; Nitril; Amid der Formel $-CON(R_2,R_3)$, worin $R_2$ und $R_3$, die gleich oder verschieden sind, für ein Wasserstoffatom oder einen linearen oder verzweigten Alkylrest mit 1 bis 20 Kohlenstoffatomen stehen, wobei einer der Reste $R_2$ und $R_3$ außerdem einen Hydroxyalkylrest darstellen kann, in dem der Alkylrest,linear oder verzweigt, 1 bis 20 Kohlenstoffatome aufweist, bedeutet,

in Gegenwart eines in Wasser auflösbaren Polyesters, der sich ableitet von zumindest einer aromatischen Dicarbonsäure, zumindest einem aliphatischen Diol und der eine Vielzahl Sulfonyloxy-Gruppierungen der allgemeinen Formel

$-SO_3M_n$ (I)

enthält, worin

M bedeutet:

ein Wasserstoffatom

ein Alkali- oder Erdalkalimetall

einen Ammoniumrest

einen quaternären Ammoniumrest

n gleich 1 ist oder, wenn M für ein Erdalkalimetall steht, 1/2 ist,

wobei der auflösbare Polyester zumindest 5 bis 60%, ausgedrückt als Gewicht der Gesamtheit auflösbarer Polyester/acrylisches (Co)Polymeres,beträgt.

2. Verfahren gemäß Anspruch 1, dadurch gekennzeichnet, daß der eingesetzte, auflösbare Polyester ein Copolyester ist, der eine Vielzahl von Gruppierungen, die sich von zumindest zwei Dicarbonsäuren ableiten, von denen eine zumindest eine Sulfonyloxygruppe in ihrem Molekül enthält, und eine Vielzahl von Gruppierungen, die sich von zumindest einem aliphatischen Diol ableiten, enthält.

3. Verfahren gemäß Anspruch 2, dadurch gekennzeichnet, daß die Anzahl der Gruppierungen, die sich von einer Dicarbonsäure mit einer Sulfonyloxygruppe ableiten, zur Gesamtheit von 100 Gruppierungen,

die sich von Dicarbonsäuren ableiten, 5 bis 30 beträgt.

4. Verfahren gemäß einem der Ansprüche 1 bis 3, dadurch gekennzeichnet, daß der auflösbare Polyester ein Copolyester ist, der eine Vielzahl Gruppierungen, die sich von zumindest einer nicht-sulfonierten Dicarbonsäure aus der Gruppe der Terephthal-, Isophthal- und Phthalsäure ableiten, enthält.

5. Verfahren gemäß Anspruch 4, dadurch gekennzeichnet, daß der auflösbare Polyester ein Copolyester ist, der eine Vielzahl Gruppierungen enthält, die sich von der Tere- und Isophthalsäure ableiten.

6. Verfahren gemäß Anspruch 5, dadurch gekennzeichnet, daß der auflösbare Polyester ein Copolyester ist, in dem die Anzahl der Terephthalat-Gruppierungen 20 bis 99% der Gesamtanzahl der Terephthalat- und Isophthalat-Gruppierungen beträgt.

7. Verfahren gemäß einem der Ansprüche 2 bis 6, dadurch gekennzeichnet, daß der in Wasser auflösbare Polyester eine Vielzahl Gruppierungen, die sich von der 5-Sulfoisophthalsäure ableiten, enthält.

8. Verfahren gemäß einem der Ansprüche 1 bis 7, dadurch gekennzeichnet, daß der auflösbare Polyester eine Vielzahl von Gruppierungen enthält, die sich von zumindest einem aliphatischen Diol der Gruppe Ethylenglykol und seiner Oligomeren der Formel $HO-(CH_2-CH_2-O-)_nH$, worin n für eine ganze Zahl von 2 bis 10 steht, ableiten.

9. Verfahren gemäß einem der Ansprüche 1 bis 8, dadurch gekennzeichnet, daß das acrylische Monomere ausgewählt ist aus der Gruppe von Methylacrylat und -methacrylat, Ethylacrylat und -methacrylat, Acryl- und Methacrylsäure, Acrylamid und Methacrylamid, N-Methylolacrylamid und N-Methylolmethacrylamid.

10. Verfahren gemäß einem der Ansprüche 1 bis 9, dadurch gekennzeichnet, daß eines oder mehrere nicht-acrylische, ethylenische Monomere dem acrylischen Monomeren in einem Anteil von geringer als 20 Mol-% des acrylischen Monomeren assoziiert sind.

11. Verfahren gemäß einem der Ansprüche 1 bis 10, dadurch gekennzeichnet, daß das modifizierte Polymere auflösbarer Polyester/acrylisches (Co)Polymeres in Form einer wäßrigen Dispersion eingesetzt wird.

12. Verfahren gemäß einem der Ansprüche 1 bis 10, dadurch gekennzeichnet, daß das modifizierte Polymere in Form einer wäßrigen Lösung eingesetzt wird, die erhalten wird durch Neutralisation mit einer Alkalibase der freien Carbonsäuregruppen, die in dem modifizierten Polymeren der wäßrigen Dispersion vorhanden sind.

13. Verfahren gemäß einem der Ansprüche 1 bis 12, dadurch gekennzeichnet, daß man 0,1 bis 15 Gew.% in bezug auf das modifizierte Polymere eines Vernetzungsmittels aus der Gruppe der Phenol/Formaldehydharze und Amin/ Formaldehydharze zugibt.

14. Verfahren gemäß einem der Ansprüche 1 bis 13, dadurch gekennzeichnet, daß man auf zumindest einer der Oberflächen des Polyesterfilmträgers 0,01 bis 0,5 $g/m^2$ an modifiziertem Polymeren auflösbarer Polyester/acrylisches (Co)Polymeres aufbringt.

15. Verfahren gemäß einem der Ansprüche 1 bis 14, dadurch gekennzeichnet, daß der Polyesterfilm ein Polyethylenglykolterephthalat-Film mit einer Dicke von 5 bis 300 Mikrometern ist.

16. Verfahren gemäß einem der Ansprüche 1 bis 15, dadurch gekennzeichnet, daß die Beschichtung des Polyesterfilms durch Überziehen mit einer wäßrigen Zusammensetzung des modifizierten Polymeren vor jedem Strecken oder zwischen zwei Streckungen des Films in senkrechten Richtungen durchgeführt wird.

17. Polyesterverbundfilm, bestehend aus einem orientierten Film aus einem linearen Polyesterträger, bei dem auf zumindest eine seiner Oberflächen eine primäre Haftbeschichtung und eine Endbeschichtung für die Anwendung aufgebracht sind, dadurch gekennzeichnet, daß die primäre Haftbeschichtung aus

einem modifizierten Polymeren auflösbarer Polyester/acrylisches (Co)Colymeres gemäß einem der Ansprüche 1 bis 12 besteht.

**18.** Film gemäß Anspruch 17, dadurch gekennzeichnet, daß die Endbeschichtung ein Polyethylenfilm ist.

**19.** Film gemäß Anspruch 17, dadurch gekennzeichnet, daß die Endbeschichtung eine Druckfarbe ist.

**20.** Film gemäß Anspruch 17, dadurch gekennzeichnet, daß die Endbeschichtung eine metallische Schicht ist.

**21.** Film gemäß Anspruch 17, dadurch gekennzeichnet, daß die Endbeschichtung ein Überzug auf Polyvinylalkohol-Basis ist.

**22.** Film gemäß Anspruch 17, dadurch gekennzeichnet, daß die Endbeschichtung ein Überzug auf Basis eines Acrylpolymeren ist.

**23.** Film gemäß Anspruch 17, dadurch gekennzeichnet, daß die Endbeschichtung ein cellulosischer Überzug ist.

**Patentansprüche für folgende Vertragsstaaten : AT, ES**

**1.** Verfahren zur Gewinnung eines orientierten Films aus linearem Polyester, der auf zumindest einer seiner Oberflächen eine primäre Haftbeschichtung enthält, die die Haftung des Films an einer Endbeschichtung für die Anwendung verbessert, dadurch gekennzeichnet, daß man auf zumindest einer der Oberflächen eines Polyesterfilmträgers eine Schicht einer wäßrigen Zusammensetzung eines modifizierten Polymeren aufbringt, erhalten durch radikalische Polymerisation in wäßriger Phase zumindest eines Monomeren acrylischer Natur der allgemeinen Formel

$$CH_2 = \overset{\displaystyle R}{\overset{|}{C}} - Y \qquad (II)$$

worin

R für ein Wasserstoffatom oder eine Alkylgruppe mit 1 bis 4 Kohlenstoffatomen, die gegebenenfalls durch eine Hydroxylgruppe substituiert ist, steht,

Y eine funktionelle Hydroxycarbonylgruppe; Alkoxycarbonyl der Formel $-COOR_1$, worin $R_1$ ein linearer oder verzweigter (gegebenenfalls durch einen Hydroxylrest substituierter) Alkylrest mit 1 bis 20 Kohlenstoffatomen ist; Nitril; Amid der Formel $-CON(R_2,R_3)$, worin $R_2$ und $R_3$, die gleich oder verschieden sind, für ein Wasserstoffatom oder einen linearen oder verzweigten Alkylrest mit 1 bis 20 Kohlenstoffatomen stehen, wobei einer der Reste $R_2$ und $R_3$ außerdem einen Hydroxyalkylrest darstellen kann, in dem der Alkylrest,linear oder verzweigt, 1 bis 20 Kohlenstoffatome aufweist, bedeutet,

in Gegenwart eines in Wasser auflösbaren Polyesters, der sich ableitet von zumindest einer aromatischen Dicarbonsäure, zumindest einem aliphatischen Diol und der eine Vielzahl Sulfonyloxy-Gruppierungen der allgemeinen Formel

$-SO_3M_n$ (I)

enthält, worin

M bedeutet:

ein Wasserstoffatom

ein Alkali- oder Erdalkalimetall

einen Ammoniumrest

einen quaternären Ammoniumrest

n gleich 1 ist oder, wenn M für ein Erdalkalimetall steht, 1/2 ist,

wobei der auflösbare Polyester zumindest 5 bis 60%, ausgedrückt als Gewicht der Gesamtheit

auflösbarer Polyester/acrylisches (Co)Polymeres,beträgt.

2. Verfahren gemäß Anspruch 1, dadurch gekennzeichnet, daß der eingesetzte, auflösbare Polyester ein Copolyester ist, der eine Vielzahl von Gruppierungen, die sich von zumindest zwei Dicarbonsäuren ableiten, von denen eine zumindest eine Sulfonyloxygruppe in ihrem Molekül enthält, und eine Vielzahl von Gruppierungen, die sich von zumindest einem aliphatischen Diol ableiten, enthält.

3. Verfahren gemäß Anspruch 2, dadurch gekennzeichnet, daß die Anzahl der Gruppierungen, die sich von einer Dicarbonsäure mit einer Sulfonyloxygruppe ableiten, zur Gesamtheit von 100 Gruppierungen, die sich von Dicarbonsäuren ableiten, 5 bis 30 beträgt.

4. Verfahren gemäß einem der Ansprüche 1 bis 3, dadurch gekennzeichnet, daß der auflösbare Polyester ein Copolyester ist, der eine Vielzahl Gruppierungen, die sich von zumindest einer nicht-sulfonierten Dicarbonsäure aus der Gruppe der Terephthal-, Isophthal- und Phthalsäure ableiten, enthält.

5. Verfahren gemäß Anspruch 4, dadurch gekennzeichnet, daß der auflösbare Polyester ein Copolyester ist, der eine Vielzahl Gruppierungen enthält, die sich von der Tere- und Isophthalsäure ableiten.

6. Verfahren gemäß Anspruch 5, dadurch gekennzeichnet, daß der auflösbare Polyester ein Copolyester ist, in dem die Anzahl der Terephthalat-Gruppierungen 20 bis 99% der Gesamtanzahl der Terephthalat- und IsophthalatGruppierungen beträgt.

7. Verfahren gemäß einem der Ansprüche 2 bis 6, dadurch gekennzeichnet, daß der in Wasser auflösbare Polyester eine Vielzahl Gruppierungen, die sich von der 5-Sulfoisophthalsäure ableiten, enthält.

8. Verfahren gemäß einem der Ansprüche 1 bis 7, dadurch gekennzeichnet, daß der auflösbare Polyester eine Vielzahl von Gruppierungen enthält, die sich von zumindest einem aliphatischen Diol der Gruppe Ethylenglykol und seiner Oligomeren der Formel $HO-(CH_2-CH_2-O-)_nH$, worin n für eine ganze Zahl von 2 bis 10 steht, ableiten.

9. Verfahren gemäß einem der Ansprüche 1 bis 8, dadurch gekennzeichnet, daß das acrylische Monomere ausgewählt ist aus der Gruppe von Methylacrylat und -methacrylat, Ethylacrylat und -methacrylat, Acryl- und Methacrylsäure, Acrylamid und Methacrylamid, N-Methylolacrylamid und N-Methylolmethacrylamid.

10. Verfahren gemäß einem der Ansprüche 1 bis 9, dadurch gekennzeichnet, daß eines oder mehrere nicht-acrylische, ethylenische Monomere dem acrylischen Monomeren in einem Anteil von geringer als 20 Mol-% des acrylischen Monomeren assoziiert sind.

11. Verfahren gemäß einem der Ansprüche 1 bis 10, dadurch gekennzeichnet, daß das modifizierte Polymere auflösbarer Polyester/acrylisches (Co)Polymeres in Form einer wäßrigen Dispersion eingesetzt wird.

12. Verfahren gemäß einem der Ansprüche 1 bis 10, dadurch gekennzeichnet, daß das modifizierte Polymere in Form einer wäßrigen Lösung eingesetzt wird, die erhalten wird durch Neutralisation mit einer Alkalibase der freien Carbonsäuregruppen, die in dem modifizierten Polymeren der wäßrigen Dispersion vorhanden sind.

13. Verfahren gemäß einem der Ansprüche 1 bis 12, dadurch gekennzeichnet, daß man 0,1 bis 15 Gew.% in bezug auf das modifizierte Polymere eines Vernetzungsmittels aus der Gruppe der Phenol/Formaldehydharze und Amin/Formaldehydharze zugibt.

14. Verfahren gemäß einem der Ansprüche 1 bis 13, dadurch gekennzeichnet, daß man auf zumindest einer der Oberflächen des Polyesterfilmträgers 0,01 bis 0,5 g/m$^2$ an modifiziertem Polymeren auflösbarer Polyester/acrylisches (Co)Polymeres aufbringt.

15. Verfahren gemäß einem der Ansprüche 1 bis 14, dadurch gekennzeichnet, daß der Polyesterfilm ein Polyethylenglykolterephthalat-Film mit einer Dicke von 5 bis 300 Mikrometern ist.

16. Verfahren gemäß einem der Ansprüche 1 bis 15, dadurch gekennzeichnet, daß die Beschichtung des Polyesterfilms durch Überziehen mit einer wäßrigen Zusammensetzung des modifizierten Polymeren vor jedem Strecken oder zwischen zwei Streckungen des Films in senkrechten Richtungen durchgeführt wird.